Europäisches Patentamt

European Patent Office

Office européen des brevets

(19)

(11) **EP 0 889 004 A1**

(12) **EUROPÄISCHE PATENTANMELDUNG**

(43) Veröffentlichungstag:
**07.01.1999 Patentblatt 1999/01**

(51) Int. Cl.⁶: **C01B 33/40**, C11D 3/12,
B01J 21/16, B01J 23/00,
B01J 20/12, C09D 7/12,
C12H 1/04

(21) Anmeldenummer: 98111803.7

(22) Anmeldetag: 26.06.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **01.07.1997 DE 19727893**

(71) Anmelder: **Clariant GmbH**
**65929 Frankfurt am Main (DE)**

(72) Erfinder:
• **Bauer, Harald, Dr.**
**50170 Kerpen (DE)**
• **Schimmel, Günther, Dr.**
**50374 Erftstadt (DE)**

(54) **Verfahren zur Herstellung synthetischer Schichtsilikate des Hectorit-Typs**

(57)    Die Erfindung betrifft ein Verfahren zur Herstellung von synthetischen Schichtsilikaten des Hectorit-Typs aus einer Reaktionsmischung, die eine $MgSO_4$-Lösung, eine Lithium- und Fluorid-Ionen-Quelle sowie eine Silicium-Verbindung, enthält.

    Die Erfindung betrifft ebenfalls die nach diesem Verfahren hergestellten synthetischen Schichtsilikate des Hectorit-Typs sowie ihre Verwendung.

EP 0 889 004 A1

**Beschreibung**

Die Erfindung betrifft ein Verfahren zur Herstellung von synthetischen Schichtsilikaten des Hectorit-Typs aus einer Reaktionsmischung, die eine $MgSO_4$-Lösung, eine Lithium- und Fluorid-Ionen-Quelle sowie eine Silicium-Verbindung enthält, die nach diesem Verfahren hergestellten synthetischen Schichtsilikate des Hectorit-Typs und ihre Verwendung. Synthetische Hectorite stellen trioktraedrische Schichtsilikate des Smectit-Typs der allgemeinen Formel

$$[Mg_{6-x}Li_xSi_8O_{20}(OH)_{4-y}F_y]^{x(-)} \, {}^x/_z M^{z(+)}$$

wobei $0 < x < 1,2$ und $0 < y < 4$ ist und M ein Kation mit der Wertigkeit z (z ist 1, 2 oder 3) bedeutet, dar. Sie werden aufgrund ihrer rheologischen Eigenschaften vielfach in Verdickersysteme eingesetzt (Thixotropierungsmittel). Für die Herstellung der synthetischen Hectorite sind eine Reihe von Verfahren bekannt.

Die DE-A-11 84 742 beschreibt ein Verfahren zur Herstellung eines synthetischen Minerals vom Hectorit-Typ mit verbesserten rheologischen Eigenschaften, wobei eine Magnesiumionen enthaltende Lösung und eine alkalische Natriumsilikat-Lösung in eine dritte Lösung, die Lithium und Fluoridionen enthält, eingebracht werden und dann das Reaktionsgemisch unter Bewegung erhitzt wird, bis eine Probe des Produktes hieraus nach Filtration, Waschen und Trocknen bei 110 °C in 5 gew.%iger Dispersion in Wasser ein Gel bildet. Das Produkt wird aufgearbeitet und auf 110 bis 450 °C erhitzt, um brauchbare wäßrige Gelierungseigenschaften zu entwickeln.

Die DE-A-15 67 503 beschreibt ein analoges Verfahren, jedoch wird das Produkt vor der Hitzebehandlung bei 110 bis 450 °C in wäßriger Lösung mit einem Aminsalz umgesetzt. Nach beiden Verfahren erhält man Produkte, die in der Lage sind, organische Addukte zu bilden.

Beide Verfahren weisen jedoch den Nachteil auf, daß erheblich lange Reaktionszeiten notwendig sind und außerdem eine genaue Kontrolle der Qualität des Endproduktes sehr umständlich ist.

Die britische Patentschrift GB-B-1 432 770 beschreibt ein Verfahren zur Herstellung eines wasserhaltigen Magnesiumsilikats mit einer dem Hectorit ähnlichen Kristallstruktur, bei dem zunächst ein Magnesiumsalz mit einer Natriumcarbonatlösung zu Magnesiumcarbonat umgesetzt wird und dann eine Natriumsilikatlösung hinzugegeben wird, so daß Siliciumdioxid ausfällt. Die erhaltenen Suspensionen werden danach eine Stunde bei Atmosphärendruck gekocht und dann für 3 bis 6 Stunden bei 207 °C hydrothermal behandelt.

Nach diesen Verfahren erhält man fluoridfreie Produkte, deren optische Dichte und deren Bingham-Fließwerte (2 %ige Dispersion in Leitungswasser mit 140 mg $CaCO_3$/l) gemessen werden.

Ein weiteres Verfahren zur Herstellung fluoridfreier wasserhaltiger Magnesiumsilikate ist in der DE-C 23 56 865 beschrieben. Danach wird eine wasserlösliche Magnesiumverbindung in einem wäßrigen Medium gelöst und zu dem wäßrigen Medium zur Ausfällung einer wasserunlöslichen Magnesiumverbindung eine wäßrige alkalische Lösung von einer oder mehreren Natriumverbindungen zugegeben und danach eine Siliciumdioxidausfällung in der die wasserunlösliche Magnesiumverbindung enthaltenden wäßrigen Suspension bewirkt. Nach diesem Verfahren werden die Magnesiumverbindung und das Siliciumdioxid gemeinsam ausgefällt.

In der PCT/WO 93/11069 ist ein Verfahren zur Herstellung eines synthetischen Hectorits beschrieben, in dem unter basischen Bedingungen eine Vorstufe in fester Form hergestellt wird, die bereits die Mg/Si-Verhältnisse des späteren Hectorits aufweist. Die Herstellung dieser Vorstufe erfolgt in einem engem pH-Bereich zwischen 7,5 und 9 oder zwischen 9,7 und 10. Die Vorstufe wird dann auf hydrothermalem Wege zum eigentlichen Hectorit-Produkt kristallisiert. Durch die genaue pH-Kontrolle und Einhaltung konstanter Werte soll ein in seinen Eigenschaften verbessertes Produkt erhalten werden.

Nach der US-A-3,586,478 erhält man ein synthetisches Schichtsilikat des Hektorit-Typs, in dem eine wäßrige Mischung aus einem wasserlöslichem Magnesiumsalz, Natriumsilikat, Natriumcarbonat oder Natronlauge und einer Li- und F-Ionen enthaltenden Lösung hergestellt wird, diese bei Siedetemperatur und Atmosphärendruck 10 bis 20 Stunden hydrothermal behandelt wird, so daß das Produkt auskristallisiert. Nach Waschen und Trocknen erhält man ein Produkt, in dem die Kationen und Anionen in bestimmten Mengenverhältnissen zueinander stehen.

Die DE-A-16 67 502 beschreibt ein Verfahren zur Herstellung eines Fluorid-freien synthetischen Tonminerals, bei dem in eine erste wäßrige Lösung, die Magnesium- und Lithium-Ionen enthält, eine zweite Lösung, die Natriumcarbonat und Natriumsilikat enthält, gegeben wird, wobei ein weißer Niederschlag gebildet wird. Das entstandene Gemisch wird anschließend erhitzt und unter Druck nach längerer Zeit ein Produkt auskristallisiert, welches gewaschen und getrocknet wird.

Nach dem Verfahren der GB-A-1 054 111 wird ein synthetisches Tonmineral hergestellt, indem eine wäßrige Lösung, die Lithium- und Magnesium-Ionen enthält, zum Siedepunkt erhitzt wird und in diese langsam eine Natriumsilikat-Lösung gegeben wird. Anschließend wird hierzu eine wäßrige Natriumcarbonat-Lösung gegeben. Nach hydrothermaler Behandlung wird das Produkt filtriert, gewaschen, getrocknet und gemahlen.

Die EP-A-0 088 372 beschreibt ein Verfahren zur Herstellung eines synthetischen Hectorits, bei dem man eine wäßrige Losung eines Magnesiumsalzes auf 110 bis 373 °C aufheizt, Lithium- und/oder Fluoridionen zugibt und anschließend eine Natrium- und Silicium-Quelle zusetzt

Die vorgenannten Verfahren weisen vielfach den Nachteil auf, daß die Raum-Zeit-Ausbeuten gering sind und die Produkteigenschaften oft nur schwierig gleichmäßig reproduzierbar sind. Viele Verfahren erscheinen außerdem sehr zeitaufwendig und ökonomisch ungünstig.

Die Edukte müssen oft mühsam aufbereitet werden, um später gut handhabbare Lösungen für die eigentliche Reaktionen zu erhalten. Die benötigte $SiO_2$-Quelle etwa, üblicherweise in der Form von Sand (Quarzsand) vorliegend, muß energie- und zeitaufwendig hydrothermal aufgeschlossen oder in Hochtemperaturöfen vorbehandelt werden und anschließend das so erhaltene Festwasserglas wieder in Lösung gebracht werden.

Der Erfindung liegt daher die Aufgabe zugrunde, ein Verfahren zur Herstellung synthetischer Schichtsilikate des Hectorit-Typs zur Verfügung zu stellen, das die vorgenannten Nachteile vermeidet und in kurzer Zeit zu guten Ausbeuten von Produkten mit reproduzierbaren Eigenschaften führt.

Es ist ebenfalls Aufgabe der vorliegenden Erfindung, ein Verfahren zur Herstellung von synthetischen Schichtsilikaten des Hectorit-Typs zur Verfügung zu stellen, bei dem die Silicium-Verbindung ohne weitere aufwendige Aufarbeitung direkt als Edukt eingesetzt werden kann.

Diese Aufgabe wird gelöst durch ein Verfahren der eingangs beschriebenen Art, dadurch gekennzeichnet, daß die Silicium-Verbindung in Form von siliciumoxid-haltigem Sand eingesetzt wird.

Bevorzugt handelt es sich bei dem siliciumoxid-haltigen Sand um Quarzsand.

Bevorzugt weist der Sand einen Gehalt von mehr als 85 Gew.-% $SiO_2$ auf.

Besonders bevorzugt weist der Sand einen Gehalt von mehr als 95 Gew.-% $SiO_2$ auf.

Insbesondere weist der Sand einen Gehalt von mehr als 99 Gew.-% $SiO_2$ auf.

Bevorzugt wird die Silicium-Verbindung in Form einer wäßrigen Suspension eingesetzt.

Bevorzugt liegen in der Reaktionsmischung die Molverhältnisse

Mg/Si = 0,7144 bis 0,6405
Li/Si = 0,02464 bis 0,09854
F/Si = 0,0200 bis 0,4899
Na/Si = 0,9514 bis 2,0298
$H_2O$/Si = 13,9947 bis 42,7536

vor.

Besonders bevorzugt beträgt das Molverhältnis

Mg/Si = 0,6947 bis 0,6528 und Li/Si = 0,04434 bis 0,08622.

Bevorzugt wird das erfindungsgemäße Verfahren so ausgeführt, daß man eine wäßrige $MgSO_4$-Lösung mit einer wäßrigen Lösung, die Lithium- und Fluoridionen enthält, umsetzt und anschließend die Silicium-Verbindung in Form ihrer wäßrigen Suspension hinzufügt.

Bevorzugt beträgt die Temperatur bei Zugabe der Silicium-Verbindung 0 bis 300 °C.

Besonders bevorzugt beträgt die Temperatur bei Zugabe der Silicium-Verbindung 20 bis 50 °C.

Bevorzugt wird die gesamte Reaktionsmischung nach Zugabe aller Komponenten für 0,5 bis 20 Stunden auf 70 bis 300 °C erhitzt.

Besonders bevorzugt wird für 3 bis 10 Stunden auf 170 bis 230 °C erhitzt.

In Ausgestaltung des erfindungsgemäßen Verfahrens kühlt man die nach dem Erhitzen erhaltene Suspension ab, wäscht und trocknet sie.

Bevorzugt wird das nach der Trocknung erhaltene Produkt aufgemahlen.

Die Erfindung betrifft ebenfalls einen synthetischen Hektorit, der nach dem erfindungsgemäßen Verfahren hergestellt wurde.

Der nach dem erfindungsgemäßen Verfahren hergestellte Hectorit entspricht der Formel

$$[Mg_{3-x}Li_xSi_4O_{10}(OH)_{2-y}F_y]^{x-} \, ^x/_zM^{z+}$$

mit $0,1 \leq x \leq 0,4$ und $0 < y \leq 2$, und wobei M ein Alkalimetallion mit der Wertigkeit z ist.

Der nach dem erfindungsgemäßen Verfahren hergestellte Hectorit entspricht bevorzugt der Formel

$$[Mg_{3-x}Li_xSi_4O_{10}(OH)_{2-y}F_y]^{x-} \, ^x/_zM^{z+}$$

mit $0,1 \leq x \leq 0,4$ und $0 < y \leq 2$, M ist ein Alkalimetallion mit der Wertigkeit z, und in dem der Fluorgehalt $[c_F]$ zum Siliciumgehalt $[c_{Si}]$ im Verhältnis

$$c_F[\text{mol}] = -1{,}92 \cdot c_{Si}[\text{mol}] + b \text{ mit } b = 2{,}18 \text{ bis } 2{,}02$$

steht.

Die Erfindung betrifft auch die Verwendung von synthetischen Schichtsilikaten des Hectorit-Typs, erhalten nach dem vorstehend beschriebenen Verfahren, zur Herstellung von oder zur Verwendung als Rheologie-Additiv, zur Klärung und Reinigung von Getränken, als Katalysator oder Katalysatorträger, Adsorptionsmittel, Bindemittel und/oder Füllstoff, (Lösungs-)Additiv für Pflanzenschutzformulierungen, Dispergator, Builder, Wäschweichmacher, Trägersubstanz für andere Stoffe und als Additiv.

Als Sand einsetzbare Edukte werden hier siliciumdioxid-enthaltende Materialien verstanden. Bevorzugt werden natürlich vorkommende Sande mit einem $SiO_2$-Gehalt von mindestens 85 Gew.-% eingesetzt. Auch Cristobalit-haltige Sande (erhältlich durch Erhitzen von Quarzsand auf über 1000 °C) können verwendet werden.

Die Körnung solcher geeigneter Sande weist etwa folgende Verteilung auf: 1 Gew.-% des Sandes ist grober als 400 $\mu$m, ca. 4 Gew.-% des Sandes ist grober als 300 $\mu$m, 45 - 60 Gew.-% ist grober als 200 $\mu$m und ca. 100 Gew.-% ist grober als 75 $\mu$m.

Generell können Quarzsande verschiedener Herkunft einsetzt werden. Erfindungsgemäß kann auf den sonst notwendigen Aufschluss des Sandes auf hydrothermalem Weg oder in Hochtemperaturöfen und nachgeschaltetes Lösen des entstehenden Festwasserglases verzichtet werden. Diese Einsatzmöglichkeit von Quarzsand ist überraschend und erlaubt einen besonders wirtschaftlichen und kostengünstigen Zugang zum synthetischen Magnesiumsilikat nach dem Verfahren der vorliegenden Erfindung.

Als Alkalien werden bevorzugt Natriumhydroxid und Natriumcarbonat in variablen Verhältnissen eingesetzt. Durch Verwendung von Silikaten mit entsprechenden $Na_2O : SiO_2$-Verhältnissen kann ein zusätzlicher Alkalizusatz auch vermieden werden.

Das erfindüngsgemäße Verfahren kann technisch auf verschiedene Art und Weise ausgeführt werden. So wird bei ansatzweiser Herstellung eine gesättigte Magnesiumsulfatlösung mit einer Lösung, die die Lithium- und Fluoridquelle darstellt, versetzt. Dann wird eine alkalische Suspension, hergestellt aus Quarzsand, Natronlauge und Natriumcarbonat, zugesetzt.

Die Zugabe der alkalischen Natriumsilikatlösung kann in einem breiten Temperaturbereich von 0 bis 300 °C erfolgen. Bevorzugt sind Temperaturen im Bereich von 20 bis 50 °C sowie Zimmertemperatur. Die entstandene Reaktionsmischung (nachfolgend auch mit Suspension bezeichnet) wird unter dem eigenen Dampfdruck der Lösung auf Temperaturen zwischen 70 und 300 °C erhitzt und für eine Zeit von 0,5 bis 20 Stunden bei der entsprechenden Temperatur belassen. Bevorzugt arbeitet man so, daß man die gesamte Suspension für 3 bis 10 Stunden auf 170 bis 230 °C erhitzt.

Danach wird die gesamte Suspension aufunter 100 °C abgekühlt. Dies kann durch direkte Kühlung erfolgen, aber auch durch indirekte Kühlung, etwa mittels Reaktormantelkühlung oder durch Entspannung der Suspension in einem weiteren Behälter.

Bei einem kontinuierlichen Verfahren können die Lösungen auch fortlaufend in einen Hochdruckbehälter eindosiert werden. Die mittlere Verweildauer sollte drei bis sechs Stunden betragen. Dabei wird gleichzeitig die entsprechende Menge an Reaktionsmischung aus dem Reaktor ausgeschleust.

Die so erhaltene Suspension enthält als unlösliche Komponente synthetisches Magnesiumsilikat sowie als Nebenprodukte gelöstes Natriumsulfat und die zur pH-Regulierung eingesetzten Carbonate und Hydroxide, und geringe Mengen der übrigen eingesetzten Ionen. Die Natriumsulfatmenge varriert entsprechend der Magnesiumsulfat-Einsatzmenge und kann gegebenenfalls durch Einsatz von Magnesiumhydroxid oder Magnesiumfluorid verringert werden.

Das erfindungsgemäße Verfahren erlaubt es, mit wesentlichen geringeren $H_2O/SiO_2$-Verhältnissen (erfindungsgemäß etwa 14 : 1 bis 43 : 1) als nach den Verfahren des Standes der Technik, die ein $H_2O/SiO_2$-Verhältnis von 53 : 1 bis über 155 : 1 benötigen, zu arbeiten, so daß nunmehr ein besonders wirtschaftliches Verfahren zur Verfügung steht.

Für bestimmte Anwendungen, etwa in Waschmitteln, kann die gemäß dem Verfahren der Erfindung anfallende Suspension nach der Trocknung ohne weitere Reinigung eingesetzt werden. Für andere Anwendungen, beispielsweise in Lacken, muß das Endprodukt dagegen äußerst rein sein. Die verschiedenen Reinigungsverfahren und ihre Effizienz werden weiter unten beschrieben.

Die nach dem Verfahren gemäß der Erfindung angefallene Suspension, die die vorgenannten Bestandteile noch enthält, kann entsprechend nachgereinigt werden. Dabei läßt sich das Löslichkeitsverhalten des in der Suspension gebildeten Natriumsulfats zu seiner Abtrennung nutzen. Unter den Konzentrationsverhältnissen des beanspruchten Verfahrens kann ein Großteil des Natriumsulfats durch gezielte Kristallisation und Abdekantieren der abgereicherten Suspension entfernt werden.

Die weitere Reinigung der danach erhaltenen Suspension kann durch Filtration erfolgen, etwa in einem Vakuumtrommelfilter, einer Filterpresse oder einem Bandfilter. Durch eine Filtration nach dem Querstromprinzip, welches den Aufbau eines Filterkuchens durch Erzeugung einer hohen Strömungsgeschwindigkeit vermeidet, werden besonders elektrolytarme Produkte erhalten.

Die Auswaschung der vorliegenden Suspension kann auch durch Zentrifugieren erfolgen, wobei ebenfalls ausreichend elektrolytarme Produkte erhalten werden, allerdings sind diese nicht so elektrolytarm wie nach der Querstromfiltration. Die Suspension wird dazu durch mehrfaches Zentrifugieren, Dekantieren der überstehenden Lösung und Wiederaufschlämmen der schwereren Phase mit Wasser gewaschen. Dieser Vorgang wird so oft wiederholt, bis die Leitfähigkeit der Suspension unter einem vorgegebenen Wert liegt. In größerem Maßstab wird das synthetische Schichtsilikat gemäß dem Verfahren der Erfindung kontinuierlich mit Wasser gewaschen.

Die Trocknung kann beispielsweise in einem Vakuumtrockenschrank oder mit einem Bandtrockner erfolgen. Vorteilhaft ist eine Verfahrensführung, bei dem zunächst eine Trocknung auf einem Bandtrockner bis zur Agglomeration (Wassergehalt etwa 80 - 85%) erfolgt und danach auf einem weiteren Bandtrockner konvektiv, also mit durchlüftetem Schüttgut bei ca. 130 °C getrocknet wird.

Für größere Mengen ist die Trocknung in einem Sprühturm bevorzugt. Dabei wird die Suspension mit einer Düse zerstäubt und entweder im Gleichstrom mit einem Heißgasstrom gemischt oder im Gegenstrom einem Heißgasstrom entgegengeführt. Es können Einstoff- und Zweistoffdüsen verwendet werden, letztere führen bei Verwendung eines entsprechenden Luftstromes zu einem gleichmäßigeren Stofffluß. Am Boden des Sprühturms angelangt, besitzt das synthetische Schichtsilikat nach dem erfindungsgemäßen Verfahren schon die endgültige Komgrößenverteilung, d.h. der Anteil der Teilchen < 53 $\mu$m beträgt ca. 20 %,, der Anteil der Teilchen < 100 $\mu$m beträgt ca. 60 %, der Anteil der Teilchen < 200 $\mu$m beträgt ca. 80 % und der Anteil der Teilchen > 200 $\mu$m beträgt ca. 20 %, so daß das vorgenannte Schichtsilikat in der Regel nicht zusätzlich durch Mahlen zerkleinert werden muß.

Um ein besonders gut lösliches Produkt nach dem erfindungsgemäßen Verfahren zu erhalten, sollte der Glühverlust ca. 15 % betragen. Wird dieser Wert wesentlich unterschritten, so geht die Auflösegeschwindigkeit zurück.

Das nach dem erfindungsgemäßen Verfahren hergestellte synthetische Schichtsilikat des Hectorit-Typs mit einer Zusammensetzung entsprechend einem Li/Si-Verhältnis von 0,0246 bis 0,0985 kristallisiert in erheblich größeren Partikeln als andere sythetische Schichtsilikate des Hektorit-Typs. Dies trifft insbesondere auf den Bereich von Li/Si von 0,04434 bis 0,08675 zu.

So beträgt der mittlere Durchmesser ($d_{50}$) der Teilchen des nach dem erfindungsgemäßen Verfahren hergestellten synthetischen Schichtsilikats in Beispiel 1 etwa 155 nm (in 2 %iger wäßriger Dispersion), ist also bedeutend größer als der mittlere Durchmesser der Teilchen eines kommerziell erhältlichen synthetischen Magnesiumsilikats ($d_{50}$ ca 70 nm). Dies ist von Vorteil bei der Anwendung als Wäscheweichmacher etc.

Anwendungsbereiche für das nach dem erfindungsgemäße Verfahren hergestellte synthetische Schichtsilikat des Hectorit-Typs sind beispielsweise

in der Getränkeindustrie zur Klarung und Reinigung von Wein, Most, Fruchtsaft, Zuckersaft und Zuckersirup, Katalysator und Katalysatorträger,
Additiv für Pflanzenschutzmittel (Fungizide, Herbizide),
Adsorptionsmittel in der Wasser- und Abwasserreinigung,
Pflege- und Poliermittel,
Dispergator, Builder, Wäscheweichmacher in Wasch-, Reinigungs- und Pflegemitteln,
Trägersubstanz für Bestandteile von Wasch-, Reinigungs- und Pflegemitteln,
Grundlagenstoff für Salben und Kosmetika,
Rheologle-Additiv (Verdickungs-, Thixotropierungs-, Stabilisierungs und Antiabsetzmittel) für Farben, Lacke, Anstrichmittel (auch auf Wasser-Basis), Fugenfüllmassen (Joint-Compounds),
Fliesenkleber (etwa auf Dispersions-Basis), Kitte, Wachse und Klebstoffe,
Additiv bei keramischen Herstellprozessen und für Glasuren,
Additiv für Bohrspülflüssigkeiten,
Additiv für Formsandbinder für Gießereizwecke.

Die nach dem erfindungsgemäßen Verfahren hergestellten synthetischen Schichtsilikate des Hectorit-Typs wurden auf ihre rheologischen Eigenschaften hin geprüft.

Es ist bekannt, daß Tonmineralien wäßrige Suspensionen mit strukturviskosem Rheologieverhalten ergeben (K. Jasmund et al., Tonminerale und Tone, Steinkopf-Verlag 1993). Charakteristisch ist das Auftreten einer Fließgrenze. Diese tritt bei plastischem Fließverhalten auf, d.h. erst oberhalb einer Mindestschubspannung beginnt der Stoff zu fließen. Die beobachtete Viskosität nimmt oft über mehrere Größenordnungen ab (Scherverflüssigung). Unterhalb der Fließgrenze verhält sich die plastische Substanz wie ein Feststoff. Das Auftreten der vorgenannten Fließgrenze ist stark von der Art und der Konzentration der in der Lösung vorhandenen Elektrolyte abhängig. Üblicherweise ergibt die Fließgrenze in elektrolytfreien oder elektrolytarmen Lösungen nur geringe Schubspannungswerte. Mit steigender Elektrolytkonzenztration zeigt auch die Fließgrenze höhere Werte. Erst bei deutlich höheren Elektrolytkonzentrationen wird ein Optimum überschritten und die Fließgrenze nimmt wieder ab.

Zur Bestimmung der rheologischen Eigenschaften werden 1,8 g Probensubstanz mit Hilfe eines Dispergators (Ultra Turrax) in 80 g entionisiertem Wasser dispergiert und 24 Stunden stehen gelassen. Die Probe wird mit einer Platt/Platte-Meßanordnung mit einem schubspannungsgesteuertem Rheometer (Carri-med 50-Viskosimeter) vermessen. Dazu wird die Probe zunächst vier Minuten bei einer linear von 250 $s^{-1}$ auf 750 $s^{-1}$ gesteigerten Schergeschwindigkeit vorgeschert, gefolgt von einer Ruhepause von vier Minuten.

Die Fließgrenze ergibt sich experimentell bei Aufnahme eines Schubspannung-Schergeschwindigkeits-Diagramms in dem Moment, in dem bei Steigerung der Schubspannung die erste Drehbewegung (Schergeschwindigkeit) einsetzt.

Beispiel 1

Zunächst werden 62,88 g NaOH (50 Gew.-%) und 6,34g $Li_2CO_3$ in 284 g entmineralisiertem Wasser suspendiert und unter Kühlung und Rühren 47 g Flußsäure (40 Gew.-% HF) dazugetropft, wobei durch die $CO_2$-Entwicklung starkes Schäumen erfolgt. Die vorgenannnte Lösung wird bei Raumtemperatur unter intensivem Rühren in eine zuvor bereitete Lösung aus 320 g $H_2O$ und 342,1 g $MgSO_4$ x 7 $H_2O$ gegeben.

Nach entsprechender Durchmischung wird zur obigen Lösung eine Suspension, in der in 480 g Wasser nacheinander 94,86 g NaOH (100 Gew.-%), 39 g $Na_2CO_3$ und 128,1g Quarzsand (>99 Gew.-%$SiO_2$, Hersteller: Fa. Zilverzand Exploitatie Beaujean B.V., Heerlen, Niederlande) eingerührt wurden unter intensivem Rühren bei Raumtemperatur zugegeben.

Dann wird die aus allen vorgenannten Komponenten entstandene Suspension bei 210 °C (pH=12,9, Leitfähigkeit: 80,7mS) 5h langsam gerührt.

Die abgekühlte Suspension mit pH=9,2 wird anschließend durch mehrfaches Zentrifugieren, Dekantieren der überstehenden Salzlösung und Wiederaufschlämmen der schwereren Phase mit insgesamt 12l entmineralisiertem Wasser gewaschen. Man erhält eine Suspension des Zielproduktes in ausreichender Reinheit, wenn deren Leitfähigkeit weniger als 2,7 mS beträgt.

Nach dem Trocknen bei 80°C im Trockenschrank und Mahlen in einer Schlagkreuzmühle, wurden 185g Produkt erhalten. Die Analyse ergibt 0,53 Gew.-% Li, 15,1 Gew.-% Mg, 24,2 Gew.-% Si, 4,6 Gew.-% F, $d_{50}$ der Primärteilchen in 2% wäßriger Lösung: 155nm. Die Aufnahme eines Röntgendiffraktogrammes zeigt ein Silikat mit Hectoritstruktur. Die rheologischen Daten wurden mit einem Carri-med 50-Viscosimeter aufgenommen.

| Fließgrenze (Pa) | Leitfähigkeit (mS) |
|---|---|
| 0,2 | 0,77 |
| 22,31 | 1,69 |
| 35,78 | 3,06 |
| 36,78 | 5,31 |

Beispiel 2

Es wird vorgegangen wie in Beispiel 1, jedoch enthalten die Lösungen:

Lösung 1:     320 g $H_2O$, darin 353,6g $MgSO_4 \cdot 7\ H_2O$ gelöst,
Lösung 2:     284 g Wasser, darin 62,88 g NaOH (50 Gew.-%) und 4,609g $Li_2CO_3$ suspendiert und 47 g Flußsäure (40 % HF),
Lösung 3:     480 g Wasser, 94,86g NaOH (100 Gew.-%), 39 g $Na_2CO_3$ und 126,79g Quarzsand (100 Gew.-% $SiO_2$, Typ: F23 mittel, Hersteller: Fa. Quarzwerke Frechen).

Die Lösungen werden wie in Beispiel 1 vereinigt und dann das Gemisch aller Komponenten bei 210 °C (pH=12,5, Leifähigkeit: 80,8mS) 8h mit 90 U/min. gerührt.

Die abgekühlte Suspension mit pH=9,1 wird anschließend durch mehrfaches Zentrifugieren, Dekantieren der überstehenden Salzlösung und Wiederaufschlämmen der schwereren Phase mit insgesamt 12l entmineralisiertem Wasser gewaschen, bis die Leitfähigkeit der Suspension unter 1,2 mS liegt.

Nach dem Trocknen bei 80 °C im Trockenschrank und Mahlen in einer Schlagkreuzmühle, wurden 185 g Produkt erhalten. Die Analyse ergibt 0,38 Gew.-% Li, 15,1 Gew.-% Mg, 22,3 Gew.-% Si, 4,4 Gew.-% F. Die Aufnahme eines Röntgendiffraktogrammes bestätigt das Vorliegen eines Silikates mit Hectoritstrukur. Die rheologischen Daten wurden mit einem Carri-med-50-Viscosimeter aufgenommen.

| Fließgrenze (Pa) | Leitfähigkeit (mS) |
|---|---|
| 8,04 | 0,83 |
| 12,86 | 1,7 |
| 13,67 | 2,99 |
| 12,46 | 5,32 |

Die nach den obigen Beispielen hergestellten Produkte lassen sich hervorragend beispielsweise als Rheologiehilfsmittel, Trägersubstanz und Adsorbens einsetzen.

**Patentansprüche**

1. Verfahren zur Herstellung von synthetischen Schichtsilikaten des Hectorit-Typs aus einer Reaktionsmischung, die eine $MgSO_4$-Lösung, eine Lithium- und Fluorid-Ionen-Quelle sowie eine Silicium-Verbindung enthält, dadurch gekennzeichnet, daß die Silicium-Verbindung in Form von siliciumoxid-haltigem Sand eingesetzt wird.

2. Verfahren nach Anspruch 1, dadurch gekennzeichnet, daß es sich bei dem siliciumoxid-haltigen Sand um Quarzsand handelt.

3. Verfahren nach Anspruch 2, dadurch gekennzeichenet, daß der Sand einen Gehalt von mehr als 85 Gew.-% $SiO_2$ aufweist.

4. Verfahren nach Anspruch 2, dadurch gekennzeichnet, daß der Sand einen Gehalt von mehr als 95 Gew.-% $SiO_2$ aufweist.

5. Verfahren nach Anspruch 2, dadurch gekennzeichnet, daß der Sand einen Gehalt von mehr als 99 Gew.-% $SiO_2$ aufweist.

6. Verfahren nach mindestens einem der Ansprüche 1 bis 5, dadurch gekennzeichnet, daß die Silicium-Verbindung in Form einer wäßrigen Suspension eingesetzt wird.

7. Verfahren nach mindestens einem der Ansprüch 1 bis 6, dadurch gekennzeichnet, daß in der Reaktionsmischung die Molverhältnisse

Mg/Si = 0,7144 bis 0,6405
Li/Si = 0,02464 bis 0,09854
F/Si = 0,0200 bis 0,4899
Na/Si = 0,9514 bis 2,0298
$H_2O$/Si = 13,9947 bis 42,7536

vorliegen.

8. Verfahren nach Anspruch 7, dadurch gekennzeichnet, daß das Molverhältnis

Mg/Si = 0,6947 bis 0,6528
Li/Si = 0,04434 bis 0,08622

beträgt.

9. Verfahren nach mindestens einem der Ansprüche 1 bis 8, dadurch gekennzeichnet, daß man eine wäßrige $MgSO_4$-Lösung mit einer wäßrigen Lösung, die Lithium- und Fluorid-Ionen enthält, umsetzt, und anschließend die Silicium-Verbindung in Form ihrer wäßrigen Suspension hinzufügt.

10. Verfahren nach mindestens einem der Ansprüche 1 bis 9, dadurch gekennzeichnet, daß die Temperatur bei Zugabe der Silicium-Verbindung 0 bis 300 °C beträgt.

11. Verfahren nach mindestens einem der Ansprüche 1 bis 10, dadurch gekennzeichnet, daß die Temperatur bei Zugabe der Silicium-Verbindung 20 bis 50 °C beträgt.

12. Verfahren nach mindestens einem der Ansprüche 1 bis 11, dadurch gekennzeichnet, daß man die gesamte Reaktionsmischung nach Zugabe aller Komponenten für 0,5 bis 20 Stunden auf 70 bis 300 °C erhitzt

13. Verfahren nach Anspruch 12, dadurch gekennzeichnet, daß man für 3 bis 10 Stunden auf 170 bis 230 °C erhitzt.

14. Verfahren nach mindestens einem der Ansprüche 1 bis 13, dadurch gekennzeichnet, daß man die nach dem Erhitzen erhaltene Suspension abkühlt, wäscht und trocknet.

15. Verfahren nach Anspruch 14, dadurch gekennzeichnet, daß man das nach der Trocknung erhaltene Produkt anschließend aufmahlt.

16. Synthetischer Hectorit, hergestellt nach dem Verfahren gemäß mindestens einem der Ansprüche 1 bis 15.

17. Synthetischer Hectorit nach Anspruch 16, welcher der Formel

$$[Mg_{3-x}Li_xSi_4O_{10}(OH)_{2-y}F_y]^{x-} \; {}^x/_z M^{z+}$$

mit $0,1 \leq x \leq 0,4$ und $0 < y \leq 2$, M ist ein Alkalimetallion mit der Wertigkeit z, entspricht.

18. Synthetischer Hectorit nach Anspruch 17, welcher der Formel

$$[Mg_{3-x}Li_xSi_4O_{10}(OH)_{2-y}F_y]^{x-} \; {}^x/_z M^{z+}$$

mit $0,1 \leq x \leq 0,4$ und $0 < y \leq 2$, M ist ein Alkalimetallion mit der Wertigkeit z, und in dem der Fluorgehalt [$c_F$] zum Siliciumgehalt [$c_{Si}$] im Verhältnis

$$c_F[mol] = -1,92 \cdot c_{Si}[mol] + b \text{ mit } b = 2,18 \text{ bis } 2,02$$

steht, entspricht.

19. Verwendung von synthetischen Schichtsilikaten des Hectorit-Typs, erhalten nach dem Verfahren gemäß mindestens einem der Ansprüche 1 bis 15, zur Herstellung von oder zur Verwendung als Rheologie-Additiv, zur Klärung und Reinigung von Getränken, als Katalysator oder Katalysatorträger, Adsorptionsmittel, Bindemittel und/oder Füllstoff, (Lösungs-)Additiv für Pflanzenschutzformulierungen, Dispergator, Builder, Wäscheweichmacher, Trägersubstanz für andere Stoffe und als Additiv.

**Europäisches Patentamt**

## EUROPÄISCHER RECHERCHENBERICHT

Nummer der Anmeldung

EP 98 11 1803

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 537 064 A (INST FRANCAIS DU PETROL) 14. April 1993 <br> * Ansprüche 1-10 * <br> * Seite 6, Zeile 51 - Seite 7, Zeile 2 * <br> * Beispiele 1,2,5 * <br> --- | 1,16-19 | C01B33/40 <br> C11D3/12 <br> B01J21/16 <br> B01J23/00 <br> B01J20/12 <br> C09D7/12 <br> C12H1/04 |
| A | WO 91 17954 A (HENKEL KGAA) 28. November 1991 <br> * Anspruch 1 * <br> * Seite 1, Zeile 1 - Zeile 6 * <br> * Seite 3, Zeile 22 - Zeile 25 * <br> * Seite 8, Zeile 8 - Zeile 17 * <br> --- | 1 | |
| D,A | EP 0 088 372 A (HOECHST AG) 14. September 1983 <br> * Ansprüche 1,2 * <br> * Beispiele 1,2 * <br> --- | 1,16-19 | |
| A | WO 92 21612 A (HENKEL KGAA) 10. Dezember 1992 <br> * das ganze Dokument * <br> --- | 1,16-19 | |
| A | US 3 586 478 A (NEUMANN BARBARA SUSAN) 22. Juni 1971 <br> * das ganze Dokument * | 1,9 | C01B |
| D | & GB 1 054 111 A (LAPORTE INDUSTRIES LTD) <br> --- | | |
| A | WO 91 08168 A (HENKEL KGAA) 13. Juni 1991 <br> --- | | |
| A | EP 0 363 197 A (UNILEVER PLC ;UNILEVER NV (NL)) 11. April 1990 <br> ----- | | |

**RECHERCHIERTE SACHGEBIETE (Int.Cl.6)**

C01B

Der vorliegende Recherchenbericht wurde für alle Patentansprüche erstellt

| Recherchenort | Abschlußdatum der Recherche | Prüfer |
|---|---|---|
| DEN HAAG | 22. Oktober 1998 | Rigondaud, B |

EPO FORM 1503 03.82 (P04C03)